# EUROPEAN PATENT APPLICATION

(11) **EP 2 025 702 A1**
(43) Date of publication of application: **18.02.2009**
(21) Application number: 06764364.3
(22) Date of filing: 31.05.2006
(51) Int. Cl.: C08J 3/22, C08L 23/08, C08L 23/14

(54) **COLOUR CONCENTRATES FOR COLOURING TECHNICAL POLYMERS**

(71) Applicant: Iqap Masterbatch Group, S.L., 08510 Masies de Roda (ES)
(72) Inventor: CASTANYER COLLEL, Josep, 08510 Masies de Roda (ES); SOLER CODINA, Montserrat, 08510 Masies de Roda (ES)
(74) Representative: Morgades y Manonelles, Juan Antonio
(86) International application number: PCT/ES2006/000312
(87) International publication number: WO 2007/138120

(57) **Abstract**

Colour concentrates are preferably single colour and have been specially designed for the optimal colouring of technical polymers such as PS, SAN, ASA, ABS, ABS/PC, PC, PBT, PET, CoPET, CAB, PMMA, PA, POM, etc. with a single colour pigment with a chemical composition between 20% and 60% of one single pigment or colouring and between 40% and 80% carrier; this carrier includes an oligomer or a combination of polymers from the group including polymers and copolymers of Ethylene-acid Acrylic, Ethylene-anhydride maleic, polypropylene-anhydride maleic, polycaprolactone or Alkyd colophonic resin and their modifications, colophonic esters and their modifications, colophonic adducts and modified phenolic esters; and the aforementioned carrier also includes one or more polymers selected from the group which includes saturated polyesters and copolyesters.

## Description

The invention refers to an innovative colour concentrate for the plastics sector to be preferably used as an intermediate product for staining polymers and more specifically technical polymers. The main purpose of this invention is to optimise the quality of the aforementioned colour concentrates to stain technical polymers such as PS (polystyrene), SAN (Styrene Acrylonite), ASA (Acrylate Styrene Acrylonite), ABS (Acrylate Butadiene Styrene), ABS/PC (blends), PC (Polycarbonate), PET (Polyethylene terephthalate), PBT (Polybutylene terephthalate), CoPET (Copolyesters), PA (Polyamides), CAB (Cellulose Acetate Butyrate), POM (Polyoxymethylene), PMMA (Polymethylmethacrylate), etc.

Generally, dyeing polymers uses a colour concentrate called "masterbatch" in the specific language of the technique. These have numerous advantages over alternative systems such as dry staining. The aforementioned dry staining mainly consists of making a simple physical mixture of pigments and a polymer resulting in a quality which is largely below that for colour concentrates, particularly with situations where the aesthetic appearance of the piece is critical.

The aforementioned colour concentrates are extremely fine particles of pigments dispersed in a plastic support similar to the resin to be stained or a support compatible with the concentrate, thereby achieving highly uniform colourings of a high quality due to optimal pigment dispersion.

In general, colour concentrates are used in processes where the material is first mixed in a screw, such as during injection moulding or extrusion-blowing processes.

The more commonly found format of these colour concentrates is in granules with a usual pigment concentration of 5-30% for organic pigments and 15-60% for inorganic pigments. The usage dose is 2-4% depending on the resin's transformation system used in staining and the thickness of the final article.

Colour concentrates may be produced in different ways:
I - From a powdered pigment: production is in two stages. During the first stage, the pigments, dispersants, stabilisers and other additives are mixed with the support resin usually in high speed mixers or by gravimetric dosage. The finished product is obtained from the second stage by extruding the premixture using an extruder, preferably a twin screw co-rotating extruder.
II - From single colour concentrates: in this case the first stage creates single pigment colour concentrates using the method described above. The final colour concentrate is obtained by extruding the physical mixture of the concentrate and support polymer (usually using a single screw extruder). The pigment concentration for single colour concentrates is usually 15-40% for organic pigments and 40-70% for inorganic pigments. These single colour concentrates are normally compatible with a very limited group of polymers.
III - From pigment preparations: Pigment preparations are characterised by a pigment being optimally dispersed in an organic support. The typical pigment concentration is 40-60% for organic pigments and 50-80% for inorganic pigments. Such as in the case of single colour concentrates, the pigment preparations have limited compatibility. In practice, the use of pigment preparations is restricted to polyolefin polymers, some elastomers and polyamide with some restrictions. The final colour concentrate is obtained by extruding the physical mixture of pigment preparations and the support polymer usually using a twin screw co-rotating extruder. Unlike other single colour concentrates, pigment preparations are physically microgranules obtained from a press filtered aqueous paste pigment. This paste is placed in a mixer which may operate as a vacuum mixer. Additionally, small quantities of special additives are included for the rapid removal of water and for soaking pigment particles by the organic substrate (oils, waxes, plastifiers, polymers, etc).

With reference to technical polymers, there have been few single colour concentrates or pigment preparations developments with optimal performance.

Currently, some technical polymer compound dyes are known, but these do not work well with the rest of the range of technical polymers. For example, Japanese Patent Nos. 2005320373 and 2005255734 describe compounds for staining polyoxymethylene polymers (POM).

Also, US Patent No. 2001049424 describes and claims for a colour concentrate compatible with a wide range of thermoplastic polymers, including polyethylenes, polypropylenes, polystyrenes, homo- and co-polymers, ABS, PA, PC, PUR, PBT, PET and thermoplastic alloys containing one of the above mentioned polymers as a minimum. The composition of the claimed universal masterbatch includes more than 85% of "filler", comprising pigment, calcium carbonate, silicates, or talc, a process assistant such as a long chain fatty acid and an anti-oxidant, at least more than 25% of a viscosity modifier such as Ethylene bis Stearmide (EBS), Polybutylene (PB) or acrylic copolymers (EMA, EBA, EEA) with the remaining amount up to 100% w/w of preferably the copolymer Styrene Butadiene Styrene (SBS).

There are "universal" pigment preparations in the state of the art which may be used for staining all types of polymers.

US Patent No. 3846360 describes and claims for a "universal" colour concentrate for staining polymeric materials selected from the group of polyolefins, copolymers of Ethylene-Vinyl acetate, terpolymers Acrylonytril-Butadiene-Styrene, polystyrene, polyamides and polyesters, which essentially consist of: different particulates evenly dispersed in a carrying material. This carrier consists essentially of a percentage around 10-60% w/w as a minimum of polymeric raw material selected from the group of copolymers containing as a minimum one diene containing between four to 12 carbon atoms and a minimum of one aromatic monovinyl hydrocarbon with between 8 to 18 carbon atoms.

Spanish patent No. 200401852 by the same applicant as this application claims for a single pigment preparation with one carrier with proportions between 50-90% of pigment and between 10-50% carrier, including one oligomer or a combination of polymers in the carrier from the group which includes polymers and copolymers of Ethylene-acid Acrylic, of Ethylene-anhydride Maleic, of Polypropylene-Anhidride Maleic or Polycaprolactone.

Also, US Patent No. 2002198122 describes and claims for a multipurpose concentrate which may be used for staining different polymers. The aforementioned concentrate includes pigments, one agglutinating component which preferably is a wax and a "blowing agent", which is a substance which may create a cellular structure in plastic.

In practice, known "universal" pigment preparations operate sufficiently well enough for a wide range of polymers however not in an optimal fashion, given that their staining force is less than pigment preparations with no modification such as polyolefins and polyesters because of their different chemical nature.

The purpose of this invention is to have an optimal composition of colour concentrate with a high degree of dispersion and staining power specifically for technical polymers. These colour concentrates comprise an optimal composition of one pigment or a mixture of pigments, dispersing agents from the group which includes polymers and copolymers of Ethylene-acid Acrylic, Ethylene-anhydride Maleic, polypropylene-anhydride maleic, polycaprolactone or alkyd colophonic resin and their modifications, colophonic esters and their modifications, colophonic adducts and modified phenolic esters topped up to 100% with any multipurpose carrier preferably a co-polyester or saturated polyester. The composition of the aforementioned masterbatch has been specially developed into an SPC ("Single Pigment concentrate").

Due to the fact that there have been few high-performance single pigment concentrates developed for technical polymers and the majority of these have been designed for staining polyolefins and technical polymers, it has been necessary to introduce innovations to these SPC's to achieve the maximum possible performance for a specific masterbatch when colouring technical polymers. In this way, in addition to the advantages of not working with powdered pigments, these concentrates may be maximised due to the structure of the SPC which has been a specially created for optimal staining of technical polymers. A summary of the more important advantages of using SPC's is given below:
1 - There is a reduction in costs associated with having different specific single pigment concentrates for each type of technical polymer which is suitable for all groups of technical polymers without reducing quality. This is an essential requirement.
2 - The increased flexibility by trimming the production process with the use of intermediate products with optimal staining power and level of dispersion.
3 - The uniformity, the level of dispersion and growing power optimal and constant values without metamerism.
4 - The simplicity of the technique: the use of known SPCs with a staining power and level of dispersion simplifies the formulation of a new colour because the colour concentrate results from the physical mixture of different SPC's with a base polymer which are then extruded.
5 - The removal of changes of scale between the laboratory and production facilities because of the use of these intermediate products. Therefore, the staining power and level of dispersion of the "masterbatch" are not affected by the type of extruder used during manufacture.
6 - Packaging and dosage are much more hygienic because dust producing products are not handled. This contributes to alleviating environmental problems in the workplace.

Therefore, the improvements in this patented consist of designing optimal colour concentrates preferably single pigment concentrates which are particularly useful for technical polymers such as PS, SAN, ASA, ABS, ABS/PC, PC, PBT, PET, CoPET, CAB, PMMA, PA, POM, etc. thereby minimising weak points in the current state-of-the-art.

By using "masterbatches" described in this invention it is possible to stay in technical plastics by using method I and method II described above corresponding to procedures I and described below:

### I) Manufacture of masterbatches for technical polymers using powdered pigments:

I.A) Mb final colour from a powdered pigment mixture:
The ingredients of the masterbatch such as powdered pigments, wetting agents, dispersants and the polymer base are placed in a high-speed mixer with the subsequent homogenous mass being extruded and *pelletised.*
Example I.A.1. Colour concentrate where the base polymer is a copolymer preferably a suitable copolyester or saturated polyester (Griltex D1943E) for the whole range of technical polymers;

| | |
|---|---|
| Griltex D1943E | 26% |
| TONE P-767 | 7% |
| Tegomer P-141 | 3% |
| AC-540 | 3% |
| Heliogen Blue K-7090 | 4.2% |
| Irgacolor Yellow 10401 | 15% |
| Kronos Bioxide 2220 | 17.3% |
| Omyacarb | 24.5% |
| | 100% |

Example I.A.2. Colour concentrate in which the base polymer is specifically for the polymer to be stained, in this case it would be ABS;

| | |
|---|---|
| SAN | 50.00 |
| Griltex D1943E | 13% |
| TONE P-767 | 3.5% |
| Tegomer P-141 | 1.5% |
| AC-540 | 1.5% |
| Heliogen Blue K-7090 | 2.1% |
| Irgacolor Yellow 10401 | 7.5% |
| Kronos Bioxide 2220 | 8.65% |
| Omyacarb | 12.25% |
| | 100% |

I.B) SPC: masterbatch containing a high concentration of one single pigment:
The composition of single pigment concentrates (SPCs), in accordance with the invention, stems from the composition developed for colour concentrates (masterbatches) with a high level of dispersion and staining power specific to technical polymers. The aforementioned masterbatch is a result of mixing the aforementioned components with two or more pigments/colourants with preferably more than 20% copolyester as a bearer (as stated in procedure I. Example I.A.1) in a high-speed mixer and subsequent extrusion, whereas the single pigment concentrate (SPC) comprises the same ingredients (described in detail in the examples below) and the same procedure however with a single pigment content of around 20-60%.
The preferred components of the single pigment concentrates (SPCs) are stated below. These pigments are given as an example of all existing inorganic, organic pigments or soluble colorants:
Pigment Blue 15:3
Pigment Blue 15:1
Pigment Green 7
Pigment White 6
Pigment Brown 24
Pigment Yellow 53
Omyacarb, calcium carbonate (Omya)
TONE: P-767, polycaprolactone (Solvay Interox)
SYLVARES RA 110, modified alkyd resin (Arizona Chemical)
TEGOMER P-141 (Degussa Goldschmidt)
AC-540, Ethylene vinyl acrylic acid copolymer (Degussa)
FUSABOND, copolymers modified by Anhydride Maleic acid (Dupont)
GRILTEX D1943E, copolyester with a melting point between 125-135°C (EMS-Griltex)
GRILTEX D1533E, copolyester with a melting point between 140-150°C (EMS-Griltex)
GRILTEX D1903E, copolyester with a melting point between 145-155°C (EMS-Griltex)
GRILTEX D1841E, copolyester with a melting point between 190-196°C (EMS-Griltex)

Examples these compounds preferably a single colour concentrate with one pigment/colourant are:

### Example 1

| *Master unit blue 100* | |
|---|---|
| Griltex D1943E | 38% |
| SYLVARES RA 110 | 8% |
| AC-540 | 4% |
| Heliogen Blue K-7090 | 50% |
| Total | 100% |

### Example 2

| *Master unit blue 153* | |
|---|---|
| Griltex D1943E | 42% |
| TONE P-767 | 8% |
| Tegomer P-141 | 5% |
| AC-540 | 5% |
| Heliogen Blue K-7090 | 40% |
| Total | 100% |

### Example 3

| *Master unit blue 151* | |
|---|---|
| Griltex D1943E | 62% |
| TONE P-767 | 4% |
| AC-540 | 4% |
| Heliogen Blue K-6902 | 30% |
| Total | 100% |

### Example 4

| *Master unit green 8730* | |
|---|---|
| Griltex D1841E | 74% |
| TONE P-767 | 3% |
| Tegomer P-141 | 3% |
| Heliogen Green K-8730 | 20% |
| Total | 100% |

### Example 5

| *Master unit yellow 24* | |
|---|---|
| Griltex D1533E | 29% |
| Fusabond | 6% |
| TONE P-767 | 5% |
| Irgacolor Yellow 10408 | 60% |
| Total | 100% |

### II) Manufacture of masterbatches for technical polymers using SPC:

Mixtures may be prepared with more than 30% carrier from single pigment concentrates for a masterbatch able to sustain any technical polymer or more precisely to stain a specific polymer. These masterbatches are obtained by homogenisation of the aforementioned mixture in an extruder preferably a twin screw co-rotating extruder.

Example IIA. Colour concentrate in which the base polymer is a multipurpose polymer or colouring all types of technical polymers. The following mixture is extruded in a preferably twin screw extruder:

| | |
|---|---|
| Griltex D1943E | 35.75 |
| Master Blue 153 (40%) | 10.50 |
| Master yellow 53 | 25.00 |
| Master white | 28.75 |
| Total | 100.00 |

Example IIB. Colour concentrate in which the base polymer is specifically for the polymer to be stained, in this case it would be ABS.

The following mixture is extruded in a preferably twin screw extruder:

| | |
|---|---|
| SAN | 35.75 |
| Master Blue 153 (40%) | 10.50 |
| Master yellow 53 | 25.00 |
| Master white | 28.75 |
| Total | 100.00 |

- Comparison of the colour of the "masterbatches" made by Procedure I (Example I.A.2) and II (Example II.B) in Table 3 below:

**Table 3**

| | Masterbatches | | |
|---|---|---|---|
| | Intensity (parts) | Delta E (parts) | Delta C (parts) |
| Masterbatch preparation with pigment (Procedure I., Example I.A.2) | 95 | 0.5 | -0.3 |
| Masterbatch preparation with single pigment concentrates (Procedure II., Example II.B) | 100 | --- | --- |

From the results shown in Table three, it is demonstrated that the "masterbatches" for a technical polymer such as an ABS made from single treatment concentrates have a greater staining power than the usual staining using pigments. Moreover there is the added advantage of the type of extruder used not affecting the colour because of the maximum colour development from the single pigment colour concentrate.
Therefore, the improvements in this patented consist of designing optimal colour concentrates preferably single pigment colour concentrates for technical polymers.
More specifically, these single pigment colour concentrate in the invention has the following chemical composition:
Organic pigments:
   20-50% pigment
   80-50% carrier
Inorganic pigments:
   20-60% pigment
   80-40% carrier
Soluble colourants:
   20-50% colourant
   80-50% carrier

The carrier includes an oligomer, a polymer or a combination of compounds from the following group:
Ethylene-acid Acrylic;
Ethylene-anhyhydride Maleic;
Polypropylene- anhydride maleic;
Polycaprolactone;
Alkyd colophon resin and their modifications, colophonic esters and their modifications, colophonic adducts and modified phenolic esters;
their mixtures or combinations.

And preferably one or more of the following polymers:
saturated polyesters and copolyester is; and
their mixtures, combinations or copolymers.

- Results of the work:

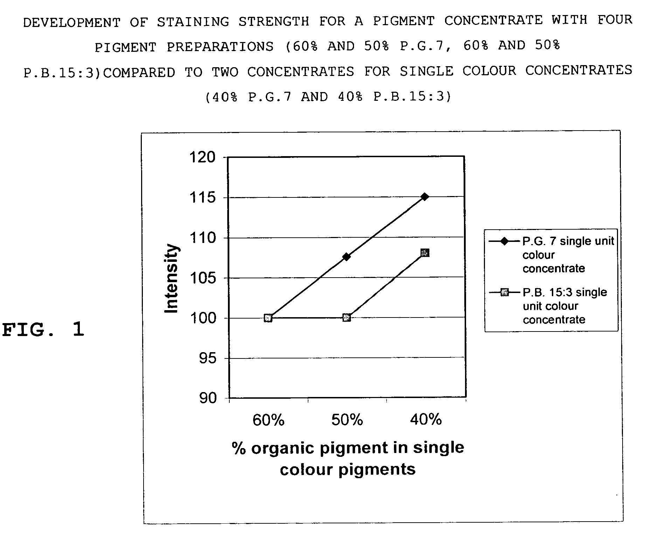

Figure 1 attached shows the development of staining power (on the y-axis) as a result of the concentration (on the x-axis) of two different pigment preparations compared to single pigment concentrates of the following pigments:
   A - Pigment blue 15:3
   B - Pigment green 7

The values shown in the aforementioned Figure correspond to an evaluation of 0.06% organic pigment + 1% P.W. 6 in ABS.

The formulation and preparation of the single pigment concentrates (SPCs) is carried out in accordance with procedure I.A. On the premise that is colouring strength increases with the pigment's dispersion ability, it has been demonstrated, both by microscopic quantification of the pigments dispersion and by measuring staining forced by spectrophotometry, that signal pigment concentrates such as technical polymers with 40% organic pigment have the best properties for specific polymer based staining as they have high aesthetic and mechanical accuracy.

Therefore, this invention, as described above, constitutes a development and improvement to universal pigment preparations described in Spanish Patent No. 200401852 by the same applicant IQAP Colorpoint. These pigment preparations have been successfully used to manufacture colour tones for any polymer. Nonetheless, with single pigment concentrates prepared in accordance with this invention, the restriction with compatibility and universality with technical polymers is accompanied by a substantial gain in dispersion and staining power.

Equally important is the research for a list of ingredients which has to be optimal in addition to having the required optimal dispersion and staining power and consequently compatibility. Compatibility is qualitatively appreciable in the texture of the extruded product while poor distribution may be seen during the injection process. Nonetheless, the dispersion and distribution of the masterbatch is quantitatively analysed for a predetermined polymer by the microtomic cross-section of the injected plate with a microtome. The dispersion and distribution percentage is determined by an optical microscope connected to image processing software.

Table 1 below shows the quantification of the distribution of preparations and single pigment concentrates on ABS.

**Table 1**

| **Samples** | **Distribution (#)** |
|---|---|
| Pig. Prep. 60% PG7 | 67.1 vs. 32.9 |
| Pig. Prep. 50% PG7 | 76.8 vs. 23.02 |
| SPC 40% PG7 | |
| Concentrate claimed in the invention | 78.07 vs. 21.92 |
| Pig. Prep. 60% PB15:3 | 30.81 vs. 69.19 |
| Pig. Prep. 50% PB15:3 | 32.73 vs. 67.26 |
| SPC 40% PG7 | |
| Concentrate claimed in the invention | 76.04 vs. 23.95 |

| | |
|---|---|
| **(#) Values shown as a percentage of the area occupied** | |

Table 2 below shows the quantification of the distribution of preparations and single pigment concentrates on PET.

**Table 2**

| **Samples** | | **Distribution (#)** |
|---|---|---|
| Pig. Prep. 60% PG7 | | 50.45 vs. 49.55 |
| Pig. Prep. 50% PG7 | | 69.35 vs. 30.64 |
| SPC 40% PG7 | | |
| Concentrate claimed in the invention | | 84.72 vs. 15.27 |
| Pig. Prep. 60% PB15:3 | | 40.30 vs. 59.7 |
| Pig. Prep. 50% PB15:3 | | 52.28 vs. 47.71 |
| SPC 40% PG7 | | |
| Concentrate claimed in the invention | | 65.21 vs. 34.78 |

| | | |
|---|---|---|
| **(#) Values shown as a percentage of the area occupied** | | |

The result is shown in Figure 1 may be confirmed after considering tables 1-2. These indicate that a single pigment concentrate ("SPC") of up to 40% organic pigment for technical polymers, which is the preferable concentrate in the invention, obtains a greater dispersion, staining power and is more compatible with different technical polymers.

By using a single pigment concentrates design for specific technical polymers in the colour concentrate production process is considerably simplified and also an excellent quality is achieved. In order to obtain this, any physical mixture of the different single pigment concentrates is required along with the base polymer to be subsequently processed preferably in a twin screw co-rotating extruder. In this way, the preliminary pre-mixing stage in the high-speed mixer or similar equipment is eliminated thereby removing the complex nature of the process which necessitates the research and selection of a list of dispersant, stabilising, lubricating additives etc for each polymer.

Furthermore the specified solution simplifies the colour equalisation process as previously stated in the production process, given that the pigment, additive, etc premixing stage is not required for the new colour development process. In this way, the colour duplication process becomes more simple and quicker. Not forgetting the evenness inherent in the procedure due to using single pigment concentrates with a known high-performance which will not vary depending on the type of extruder used to develop a colour using a mixture of single pigment concentrates.

Modifying the structure and chemical properties of these single pigment concentrates for technical polymers in this invention for "universal" pigment preparations guarantees optimal staining quality for all types of technical polymers. In this way the carrier is also multipurpose and compatible with technical polymers and is capable of being mixed together to obtain a highly accurate specific colour concentrate.

Having sufficiently described the components of this intervention, it may be understood that any modification deemed to be appropriate may be introduced where the essential characteristics of the invention are not altered.

## Claims

1. "COLOUR CONCENTRATES FOR COLOURING TECHNICAL POLYMERS, also called "masterbatches", with a highly level of dispersion and staining power specifically designed for staining technical polymers with an optimal composition of more than 50% in weight of filler **characterised by** the fact that they contain:
- between 5% and 70% of a powdered pigment mixture;
- more than 2% of wax, dispersant, lubricant, stabiliser and has a minimum include one oligomer or a combination of polymers from the group containing polymers and copolymers of Ethylene-acid Acrylic, Ethylene-anhydride maleic, polypropylene-anhydride Maleic, polycaprolactone or Alkyd colophonic resin and their modifications, colophonic esters and their modifications, colophonic adducts and modified phenolic esters; and
- the remaining amount of to 100% of a multipurpose carrier, preferably a copolyester or saturated polyester such as a resin carrier.

2. "COLOUR CONCENTRATES FOR COLOURING TECHNICAL POLYMERS" according to Claim 1, **characterised by** the fact that single colour pigments (SCPs), with a chemical composition includes:
- between 20% and 60% of a single pigment or colourant, and between 40% and 80% of a carrier;
- this carrier includes an oligomer or a combination of polymers from the group including polymers and copolymers of ethylene-acid acrylic, ethylene-anhydride maleic, polypropylene-anhydride maleic, polycaprolactone or alkyd colophonic resin and their modifications, colophonic esters and their modifications, colophonic adducts and modified phenolic esters; and
- and the aforementioned carrier includes one or more polymers selected from the group which includes saturated polyesters and copolyesters.

3. "COLOUR CONCENTRATES FOR COLOURING TECHNICAL POLYMERS" according to Claim 2, **characterised by** the fact that the pigment is an organic pigments with the aforementioned concentrates of a chemical composition including between 20% and 50% of the aforementioned pigment and between 80% and 50% of the aforementioned carrier.

4. "COLOUR CONCENTRATES FOR COLOURING TECHNICAL POLYMERS" according to Claim 2, **characterised by** the fact that the pigment is an inorganic pigments with the aforementioned concentrates of a chemical composition including between 20% and 60% of the aforementioned pigment and between 80% and 40% of the aforementioned carrier.

5. "COLOUR CONCENTRATES FOR COLOURING TECHNICAL POLYMERS" according to Claim 2, **characterised by** the fact that the pigment is a soluble colourant, with the aforementioned concentrates of a chemical composition including between 20% and 50% of the aforementioned colourant and between 80% and 50% of aforementioned carrier.

6. "COLOUR CONCENTRATES FOR COLOURING TECHNICAL POLYMERS" according to Claim 2 to 5, **characterised by** the fact that they include the use of specific intermediate single colour pigments (SCPs) for staining technical polymers which comprise one single pigment/current and a carrier, physically mixed together and a multipurpose base polymer preferably a copolyester or saturated polyester directly extruded using an extruder preferably a twin screw extruder.

7. "COLOUR CONCENTRATES FOR COLOURING TECHNICAL POLYMERS" according to Claim 2 to 5, **characterised by** the fact that they include the use of specific intermediate single colour pigments (SCPs) to dye technical polymers comprising one single pigment/colouring and a carrier, physically mixed together with a specific base polymer which may be the same polymer to be dyed or with similar properties directly extruded through an extrudor preferably a co-rotating extruder.
